Europäisches Patentamt

European Patent Office

Office européen des brevets

(19)

(11) Veröffentlichungsnummer: **0 169 962**

**A1**

(12)

# EUROPÄISCHE PATENTANMELDUNG

(21) Anmeldenummer: 85101587.5

(22) Anmeldetag: 14.02.85

(51) Int. Cl.⁴: **B 23 D 31/00**
**B 23 D 19/06**

(30) Priorität: 16.05.84 DE 3418104

(43) Veröffentlichungstag der Anmeldung:
05.02.86 Patentblatt 86/6

(84) Benannte Vertragsstaaten:
BE DE FR GB LU NL

(71) Anmelder: NAMASCOR B.V.
Oostelijke Randweg Postbus 4
NL-4780 AA Moerdijk(NL)

(72) Erfinder: Hofmann, Hans E.
Zomerland 26
NL-4768 TC Zevenbergen(NL)

(74) Vertreter: Selting, Günther, Dipl.-Ing. et al,
Deichmannhaus am Hauptbahnhof
D-5000 Köln 1(DE)

(54) **Zwischen Saum- und Querschere angeordnete Längsschere in Walzwerken.**

(57) In eine Querzerteilstraße für gewalzte, kontinuierlich durchlaufende Blechbänder (1), mit Förder- und Richteinrichtungen (2, 3) und mit einer in Durchlaufrichtung hinter einer Saumschere (4) angeordneten Querschere (6) ist zwischen der Saumschere (4) und der Querschere (6) als Längsschere eine Kreismesserschere (5) angeordnet, die eine obere und eine untere in den Ständern (11) eines Gerüstes (10) gelagerte und sich zwischen den Ständern (11) erstreckende Messerwelle (12a, 12b) aufweist.

Jede der Messerwellen (12a, 12b) hat ein sich im wesentlichen über die gesamte Länge der Messerwellen (12a, 12b) zwischen den Ständern (11) erstreckendes Außengewinde und trägt jeweils mindestens eine Schneideinheit aus einem Kreismesser (13a, 13b) und mindestens einem Niederhalter, die auf der Messerwelle (12a, 12b) mit Hilfe von Muttern festsetzbar ist.

FIG.1

Croydon Printing Company Ltd

**VON KREISLER SCHÖNWALD EISHOLD FUES**
**VON KREISLER KELLER SELTING WERNER**

0169962

PATENTANWÄLTE

Dr.-Ing. von Kreisler † 1973
Dr.-Ing. K. W. Eishold † 1981

Dr.-Ing. K. Schönwald
Dr. J. F. Fues
Dipl.-Chem. Alek von Kreisler
Dipl.-Chem. Carola Keller
Dipl.-Ing. G. Selting
Dr. H.-K. Werner

Anmelderin:

NAMASCOR B.V.
Oostelijke Randweg
Postbus 4

NL-4780 AA Moerdijk

DEICHMANNHAUS AM HAUPTBAHNHOF
**D-5000 KÖLN 1**

Sg-Da/Fe
13. Februar 1985

Querzerteilstraße

Die Erfindung betrifft eine Querzerteilstraße für gewalzte, kontinuierlich durchlaufende Blechbänder, mit Förder- und Richteinrichtungen und mit einer in Durchlaufrichtung hinter einer Saumschere angeordneten Querschere.

Derartige kontinuierlich arbeitende Querzerteilstraßen werden in Walzwerken oder in Auftragsbetrieben, die das Walzgut in Form von in Coils aufgewickelten Blechbändern erhalten, eingesetzt und dienen zum Besäumen (Längsschneiden) und zum Zerteilen (Querschneiden) der gewalzten Blechbänder.

Bei bekannten kontinuierlich arbeitenden Querzerteilstraßen werden für das Besäumen Kreismesserscheren mit zwei Messerpaaren verwendet, während für das Zerteilen des in Bewegung befindlichen Blechbandes eine fliegende Schere dient. Eine zusätzliche Längsteilung des Blechbandes außer dem Besäumen ist in solchen Querzerteilstraßen nur nachträglich in einem weiteren Arbeitsgang
möglich.

Es sind ferner Längsteilstraßen bekannt, in denen das
Besäumen von einer Kreismesserschere ausgeführt wird,
die zwei zwischen den Ständern eines Gerüstes durchgehende Messerwellen aufweist. Die Messerwellen sind
mit mehreren Messerpaaren versehen, um außer dem Besäumen gleichzeitig eine zusätzliche Längsteilung durchzuführen. Diese Anordnung hat jedoch den Nachteil, daß
die Anzahl der für die Streifenherstellung zur Verfügung stehenden Messerpaare dadurch eingeschränkt ist,
daß mindestens zwei Messerpaare zum Besäumen benötigt
werden. Bei einer derartigen Kreismesserschere werden
die Abstände der Kreismesser und der auf den jeweiligen
Messerwellen ebenfalls angeordneten Niederhalter über
Distanzhülsen und Ringscheiben auf das erforderliche
Streifenmaß eingestellt. Dabei ist stets der Ausbau
beider Messerwellen erforderlich. Es ergeben sich dadurch zwangsläufig lange Stillstandszeiten der Straße.
Eine Korrektur des zwischen den Messerpaaren eingestellten Schneidspaltes ist im eingebauten Zustand der
Messerwellen nicht möglich. Dies ist insbesondere bei
dicken Blechbändern mit entsprechend großen Toleranzen
nachteilig, da der einmal eingestellte, von der Blechdicke abhängige Schneidspalt nicht während der Fertigung zwischendurch korrigiert werden kann. Ein genauer,
sauberer Schnitt dieses Materials ist folglich mit derartigen Messerwellen nicht möglich. Die aus der Längsteilung sich ergebenden Blechstreifen werden in einer
derartigen Straße zunächst wieder aufgewickelt und in
einem späteren Arbeitsgang quergeteilt. Auf diese
Weise ist nicht nur ein zusätzlicher Arbeitsvorgang, sondern auch eine zusätzliche Fertigungsstraße, die viel Platz benötigt, erforderlich.

Der Erfindung liegt die Aufgabe zugrunde, eine Querzerteilstraße der eingangs genannten Art zu schaffen, die fertig geschnittene Blechtafeln in einem einzigen Arbeitsgang liefert.

Zur Lösung dieser Aufgabe ist erfindungsgemäß vorgesehen, daß zwischen der Saumschere und der Querschere eine Längsschere in Form einer Kreismesserschere angeordnet ist, die eine obere und eine untere in den Ständern eines Gerüstes gelagerte und sich zwischen den Ständern erstreckende Messerwelle aufweist.

Eine derartige Anordnung hat den Vorteil, daß in einer kontinuierlich arbeitenden Straße eine Längs- und Querteilung des Blechbandes zu fertigen Blechtafeln in einem Arbeitsgang möglich ist. Im Gegensatz zu einer nachträglichen Längsteilung weist die Anordnung der Längsschere in der Querzerteilstraße den Vorteil auf, keinen zusätzlichen Platz zu benötigen, da die Längsschere in Durchlaufrichtung des Blechbandes schmal ist und sich problemlos zwischen Saumschere und Querschere einfügen läßt. Dadurch, daß ein bereits besäumtes Blechband in die Längsschere einläuft, ergeben sich zwei wesentliche Vorteile. Der erste besteht darin, daß mit der Längsschere mehr Streifenschnitte möglich sind, als mit einer Kreismesserschere, die das Längsteilen der Blechbänder und das Besäumen gleichzeitig ausführt, da die sonst zum Besäumen notwendigen Kreismesserpaare für zwei zusätzliche Streifenschnitte verwendet werden können. Das Wegfallen des Besäumens ist ferner bei dicken Blechbändern von Bedeutung, weil hierbei die an die Messerwellen abgegebene Antriebsleistung oft nicht ausreicht, um die erforderliche Anzahl von Streifenschnitten einschließlich des Besäumens auszuführen. Der andere Vorteil besteht darin, daß durch Hochfahren der oberen Messerwelle in kürzester Zeit und ohne Ausbau der Messerwellen die Straße auf eine reine Querteilung des besäumten Blechbandes umgestellt werden kann.

Eine bevorzugte Weiterbildung der Erfindung besteht darin, daß jede der Messerwellen ein sich im wesentlichen über die gesamte Länge der Messerwelle zwischen den Ständern erstreckendes Gewinde aufweist und jeweils mindestens eine Schneideinheit aus einem Kreismesser und mindestens einem Niederhalter trägt, die auf der Messerwelle mit Hilfe von Muttern festsetzbar ist.

Auf diese Weise wird erreicht, daß zum Verstellen der Kreismesser und der Niederhalter ein Ausbau der Messerwellen nicht mehr nötig ist, da die Kreismesser und Niederhalter auf den Messerwellen nach dem Hochfahren der oberen Messerwelle verlagert werden können und in der gewünschten Position mit Hilfe von gegeneinander wirkenden Muttern festgesetzt werden können. Bei einer Änderung der Streifenbreiten ist nunmehr der Stillstand der Querzerteilstraße auf ein Minimum reduziert, da die Messerwellen nicht ausgebaut werden müssen. Dadurch, daß der Schneidspalt ohne großen Zeitaufwand korrigiert werden kann, können auch bei dicken Blechbändern mit entsprechend großem Toleranzbereich in der Blechstärke, der ein häufiges Nachstellen des Schneidspaltes erforderlich macht, genaue Schnitte ausgeführt werden.

Eine vorteilhafte Weiterbildung der Erfindung sieht vor, daß die lichte Weite zwischen den Ständern um die Breite von mindestens zwei Schneideinheiten und mindestens zwei Muttern breiter ist als die maximal bearbeitbare Bandbreite des Blechbandes.

Bei einer derartigen Messerwelle besteht die Möglichkeit, die Schneideinheiten in eine Parkstellung außerhalb des durchlaufenden Blechbandes zu bringen, so daß die Anzahl der durchführbaren Streifenschnitte ohne Ausbau der Messerwellen variabel ist.

Ein bevorzugtes Ausführungsbeispiel der Erfindung sieht vor, daß jede der Messerwellen auf dem Umfang verteilte, das Gewinde radial unterbrechende Längsnuten aufweist, daß der Innendurchmesser der Kreismesser und der Niederhalter größer ist als der Außendurchmesser der Messerwelle, daß die radiale Innenfläche der Kreismesser und Niederhalter mit Längsnuten versehen sind, die sich mit den Längsnuten der Messerwelle zu einem Durchlaß ergänzen und daß jeweils ein dem Durchlaß angepaßter Tragkeil über die Breite einer Schneideinheit in jeden Durchlaß formschlüssig eingreift.

Eine derartige Gestaltung der Messerwellen ermöglicht die Schneideinheiten axial auf den Tragkeilen in den Längsnuten der Messerwellen zu verschieben, wodurch der Zeitaufwand für das Einstellen der Schneidspalte zwischen den Messerpaaren und für die Umstellung auf andere Streifenbreiten zusätzlich verringert wird, da die Schneideinheiten nicht auf dem Gewinde der Messerwellen schraubent verstellt werden müssen. Außerdem wird die Einstellbarkeit des Schneidspaltes durch die freie axiale Beweglichkeit der Schneideinheiten wesentlich erleichtert. Die drehfeste Verbindung der Kreismesser mit den Messerwellen verhindert darüber hinaus einen Schlupf der Kreismesser, der die Breite des Schneidspaltes beeinflussen könnte.

Eine vorteilhafte Weiterbildung besteht darin, daß die
Muttern aus zwei relativ zueinander bewegbaren Hälften
bestehen. Auf diese Weise können die Muttern bei größeren Verstellwegen vollständig von den Messerwellen
demontiert werden und an anderer Stelle wieder anmontiert werden. Dadurch wird nochmals der Zeitaufwand für
das Einstellen der Streifenbreiten und der Schneidspalte verkürzt.

Ein bevorzugtes Ausführungsbeispiel besteht darin, daß
die einen Enden der Hälften über ein Gelenk verbunden
sind und die anderen Enden miteinander verschraubbar
sind. Die Mutter können dadurch mit einer einzigen
Schraube gelöst oder befestigt werden. Dadurch, daß die
beiden Hälften fest über ein Gelenk miteinander verbunden sind, ist bei einer Demontage mehrerer Muttern eine
Verwechselung nicht zusammengehörender Hälften nicht
möglich.

Es kann ferner vorgesehen sein, daß mindestens ein Niederhalter aus zwei relativ zueinander bewegbaren Hälften besteht. Ein derartiger geteilter Niederhalter läßt
sich z.B. bei breiten Streifenschnitten, bei denen die
Gefahr besteht, daß der Blechstreifen sich in der Mitte
wölbt, zusätzlich zwischen zwei Schneideinheiten anordnen.

Im folgenden wird unter Bezugnahme auf die Zeichnungen
ein Ausführungsbeispiel der Erfindung näher erläutert.

Es zeigen:

Fig. 1    eine Querzerteilstraße in Seitenansicht,

Fig. 2    die Querzerteilstraße in einer Draufsicht, in der die Herstellung von Blechtafeln aus einem Blechband erkennbar ist,

Fig. 3    eine Frontansicht der Längsschere mit auf zwei Messerwellen angeordneten Schneideinheiten,

Fig. 4    einen Schnitt durch eine aus einem Kreismesser und zwei Niederhaltern bestehende Schneideinheit, die mit zwei Muttern auf einer Messerwelle festgesetzt ist,

Fig. 5    einen Schnitt durch die Schneideinheit gemäß Fig. 4 entlang der Linie V-V,

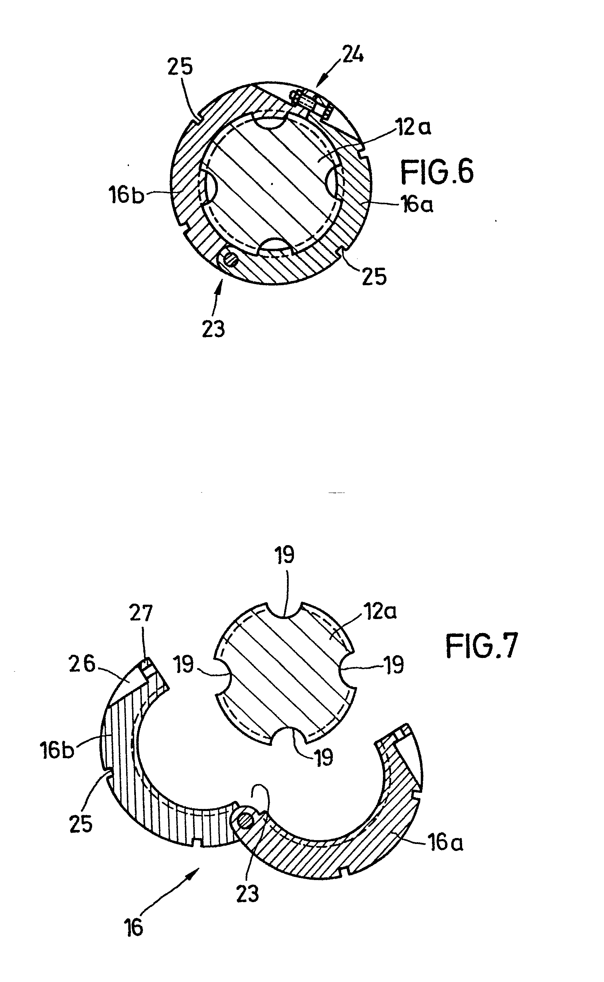

Fig. 6    einen Schnitt durch eine Mutter und durch die Messerwelle entlang der Linie VI-VI in Fig. 4,

Fig. 7    einen Schnitt gemäß Fig. 6, in dem die Mutter aufgeklappt ist,

Fig. 8    einen Schnitt durch einen Niederhalter und durch die Messerwelle entlang der Linie VIII-VIII in Fig. 4 und

Fig. 9    eine Draufsicht auf die äußere radiale Fläche des Niederhalters.

Eine vollkontinuierliche Querzerteilstraße für Blechbänder erhält das zu verarbeitende Material von einem (nicht dargestellten) Coil, das am Anfang der Straße abgehaspelt wird. Das Material, in der beschriebenen Querzerteilstraße Warmbreitband 1a, wird über nicht dargestellte Einzugswalzen und Richteinrichtungen sowie über Bandseitenführungseinrichtungen 2, die aus Vertikalrollensätzen bestehen, und Führungstreiber 3 den Zerteileinrichtungen 4,5,6 kontinuierlich horizontal liegend zugeführt. Die Bandgeschwindigkeit ist stufenlos einstellbar und kann bis zu 70 m/min betragen.

Dabei wird das Warmbreitband 1a zunächst von einer Saumschere 4 mit zwei Kreismesserpaaren 7 besäumt und gelangt als besäumtes Warmbreitband 1b in eine Längsschere 5, die Längsteilungen ausführt. Über weitere Bandseitenführungseinrichtungen 2 und einem Führungstreiber 3 wird das nunmehr längsgeteilte Warmbreitband 1c einer fliegenden Querschere 6 zugeführt, mit der im Durchlaufbetrieb Querteilungen möglich sind. Im Anschluß an die Querschere 6 erreicht das inzwischen längs und quer zerteilte Warmbreitband 1d in Form von fertig geschnittenen Blechtafeln 8a bis 8d eine Förder- und Stapeleinrichtung 9.

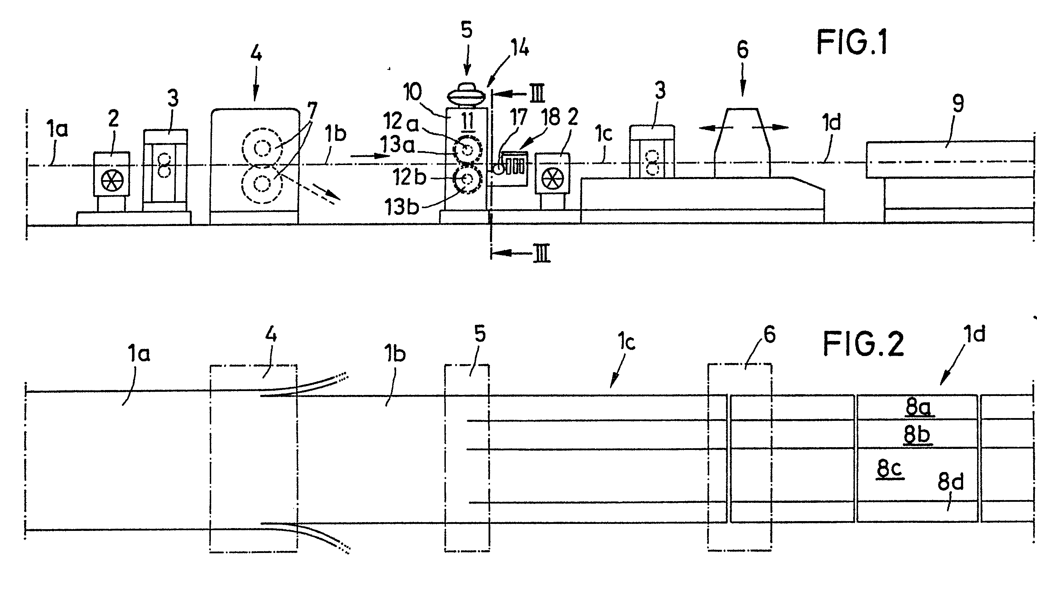

Aus Gründen der Übersichtlichkeit sind die unterhalb der Bodenebene angeordneten Maschinenelemente in Fig. 1 nicht dargestellt.

Die Längsschere 5 ist eine Kreismesserschere mit einem Horizontal-Zweiwalzengerüst 10, in dessen beiden Ständern 11 eine obere und eine untere Messerwelle 12a,12b mit Schneidvorrichtungen gelagert sind. Die obere Messerwelle 12a kann jeweils über eine in den Ständern 11 angeordnete Verstelleinrichtung 14 mit einer Spindel zur Anstellung der von den beiden Messerwellen 12a,12b getragenen Schneidvorrichtungen verstellt werden, die jeweils aus mindestens einem Kreismesserpaar 13a,13b bestehen. Die obere Messerwelle 12a kann auch mit der gleichen Verstelleinrichtung 14 völlig aus dem Schneidbereich herausgefahren werden, wodurch in vorteilhafter Weise eine schnelle Umstellung der Querzerteilstraße von einer Blechtafelherstellung auf eine reine Querteilung des besäumten Warmbreitbandes 1b ohne Ausbau der Messerwellen 12a,12b möglich ist.

Die Messerwellen 12a,12b sind horizontal und rechtwinklig zur Bewegungsrichtung des Warmbreitbandes 1b angeordnet.

Das besäumte Warmbreitband 1b verläuft horizontal zwischen den auf den Messerwellen angeordneten Kreismesserpaaren 13a,13b, wobei das Warmbreitband durch Scherung zerteilt wird. Das geteilte Warmbreitband 1c verläßt die Längsschere 5 über eine in Durchlaufrichtung des Bandes hinter den Messerwellen 12a,12b angeordnete und parallel zu diesen verlaufende Stützwalze 17, an die sich beidseitig der Bandkanten je ein Vertikalrollensatz 18 mit drei Vertikalrollen für die Seitenführung des Warmbreitbandes 1c anschließt. Die Vertikalrollen sind auf die jeweilige Bahnbreite des besäumten Warmbreitbandes 1c einstellbar.

Zur Durchführung der Streifenschnitte sind die Kreismesserpaare 13a,13b auf den Messerwellen zueinander versetzt angeordnet, wobei jeweils ein Kreismesser 13a auf der Messerwelle 12a gegen ein Kreismesser 13b auf der anderen Messerwelle 12b zur Erzeugung des Scherschnittes wirkt. Zwischen den gegenüberliegenden Kreismesserpaaren ist in axialer Richtung ein in Abhängigkeit von der Banddicke einzustellender Schneidspalt freigelassen.

Jede der Messerwellen 12a,12b weist auf ihrer Mantelfläche ein Gewinde 22 auf, das sich im wesentlichen über die gesamte Breite der Messerwellen 12a,12b zwischen den Ständern 11 erstreckt. Das Gewinde 22 wird dabei radial von vier gleichmäßig auf dem Umfang verteilten, zur Achse der Messerwellen 12a,12b achsparallelen Längsnuten 19 unterbrochen. Die Längsnuten 19 sind im Querschnitt kreisförmig gekrümmt, wobei der in der Messerwelle 12a,12b eingelassene Querschnittskreisabschnitt kleiner als ein Halbkreis ist. In den Längsnuten 19 können Tragkeile 20 mit kreisförmigem Querschnitt gleiten, die eine aus einem Kreismesser 13a, 13b und mindestens einem Niederhalter 15 bestehende Schneideinheit tragen.

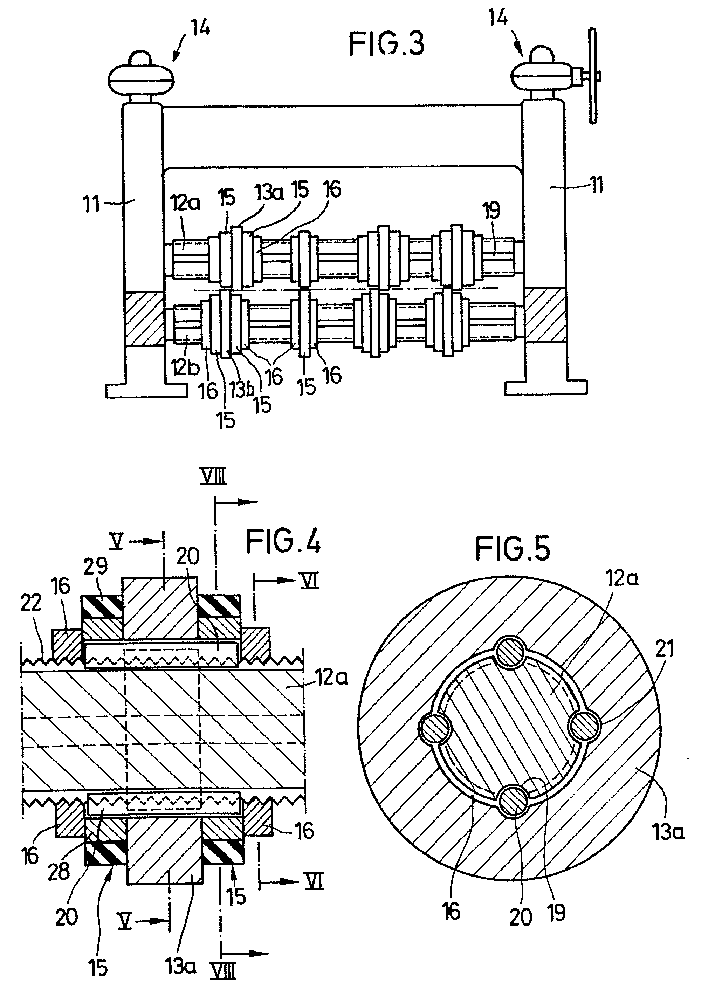

Die Kreismesser 13a,13b bestehen aus kreisringförmigen Scheiben, die auf ihrer radialen Innenfläche vier auf dem Umfang gleichmäßig verteilte axial verlaufende Längsnuten 21 aufweisen, die in ihrer Querschnittsform und radialen Lage den Längsnuten 19 der Messerwellen 12a,12b entsprechen. Jede Längsnute 21 bildet mit der entsprechenden gegenüberliegenden Längsnute 19 der Messerwellen 12a,12b einen Durchlaß für den Tragkeil 20, der formschlüssig in den Durchlaß paßt. Insgesamt vier Tragkeile 20 stützen ein Kreismesser 13a,13b auf einer Messerwelle 12a,12b derart ab, daß die radiale Innenfläche der Kreismesser 13a,13b nicht auf dem Gewinde 22 aufliegt (Fig. 5). Die Länge der Tragkeile 20 entspricht der Breite der Schneideinheit, bestehend aus einem Kreismesser 13a,13b und einem oder zwei Niederhaltern 15.

Die Niederhalter 15 bestehen aus einem kreisringförmigen Stützring 28, dessen radiale Innenfläche hinsichtlich des Innendurchmessers den Kreismessern 13a,13b entspricht. Der Niederhalter 15 wird ebenfalls von den vier Tragkeilen 20, die das Kreismesser 13a,13b tragen, gestützt und seine radiale Innenfläche liegt ebenfalls nicht auf dem Gewinde 22 auf. Der Stützring 28 ist auf seinem Außendurchmesser mit einer Gummierung 29 versehen, deren Außendurchmesser im wesentlichen dem Außendurchmesser der Kreismesser 13a,13b entspricht. Die Niederhalter 15 können einseitig neben einem Kreismesser 13a,13b oder beidseitig neben einem Kreismesser 13a,13b angeordnet sein. Ferner kann ein Niederhalter auch ohne Kreismesser 13a,13b auf der Messerwelle 12a, 12b mit Hilfe von zwei Muttern 16 befestigt sein, um bei breiten Streifenabschnitten ein Wölben des geteilten Blechbandes zu verhindern, indem ein Niederhalter auf die Mitte eines breiten Streifenabschnittes drückt.

Fig. 4 zeigt die Messerwelle 12a ausschnittsweise in einem Längsschnitt, auf der eine Schneideinheit mit Hilfe von axial beidseitig der Schneideinheit angeordneten Muttern 16 auf der Messerwelle positioniert und festgesetzt ist.

Die Breite der Messerwellen 12a,12b, und damit des gesamten Gerüstes, ist vorzugsweise erheblich breiter gewählt als die auf der Querzerteilstraße maximal zu bearbeitende Bandbreite des Warmbreitbandes 16. Auf diese Weise ist es möglich, die von den Messerwellen 12a,12b getragenen Schneideinheiten in eine Parkstellung an den jeweiligen Enden der Messerwellen 12a,12b zu bringen, in der sie nicht mit dem Warmbreitband 16 im Eingriff sind. Dabei sollte die lichte Weite der Messerwellen 12a,12b zwischen den Ständern mindestens um die Breite von zwei Schneideinheiten und zwei Muttern 16 breiter sein als die maximal bearbeitete Bandbreite. Dann ist auch beim breitesten Blechband gewährleistet, daß mindestens ein Schneideinheitenpaar, das für einen Schnitt benötigt wird, in Parkstellung gebracht werden kann. Dabei befindet sich jeweils eine Schneideinheit auf jeweils einer Messerwelle 12a,12b. Da die Schneideinheiten bei zugestellter oberer Messerwelle 12a sich überschneiden, müssen sie auf den Messerwellen auch in Parkstellung zueinander versetzt angeordnet sein.

Die Muttern 16 sind aufklappbar und bestehen aus zwei miteinander an ihrem einen Ende über ein Gelenk 23 verbundenen Hälften 16a,16b. Die anderen Enden der Hälften sind über eine Schraubverbindung 24 fest miteinander verschraubbar. Jeweils eine symmetrisch angeordnete, im geschlossenen Zustand der Mutter 16 senkrecht zur Teilungsebene verlaufende Abflachung 26 an diesen Enden, endet jeweils in einem parallel zur Teilungsebene verlaufenden Flansch 27. Im Schließzustand der Mutter 16 liegen die Flansche 27 der Hälften 16a,16b, durch die die Schraubverbindung 24 geführt ist, aneinander. Dabei ermöglichen die Abflachungen 26 den Zugang zur Schraubverbindung 24. Die Muttern 16 sind in ihrem Außendurchmesser derart kleiner als die Kreismesser 13a,13b, daß sie ohne Verlagerung der Messerwellen 12a, 12b mit geeigneten Werkzeugen gelöst oder angezogen werden können. Hierzu weisen sie auf ihrem Außendurchmesser schlitzartige Einkerbungen 25 auf, in die die Werkzeuge eingreifen können. Zwischen den Flanschen 27 können bei Bedarf zur Feinanpassung des Innengewindes der Muttern 16 an das Gewinde 22 Unterlegscheiben eingefügt werden.

Der Niederhalter 15, der ein Wölben breiter Streifenabschnitte verhindern soll, kann wie die Muttern 16 nach dem gleichen Prinzip aufklappbar ausgeführt sein, d.h. aus zwei miteinander an ihrem einen Ende über ein Gelenk verbundenen Hälften bestehen, die an ihrem anderen Ende über eine Verschraubung verschließbar sind.

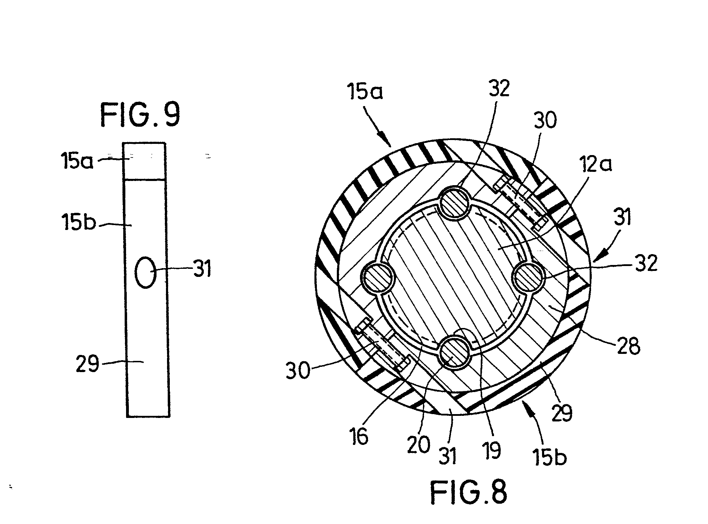

Wie in den Fign. 8 und 9 dargestellt, kann der Niederhalter 15 auch aus zwei identischen Hälften 15a,15b bestehen. Die Teilungsebene verläuft dabei mittig zwischen zwei Längsnuten 32 des Stützrings 28 und teilt den Niederhalter 15 in zwei Hälften 15a,15b. Die Verschraubungen 30 zum Montieren und Demontieren des Niederhalters 15 verlaufen senkrecht zur Teilungsebene und verbinden beide Niederhalterhälften 15a,15b im Bereich des Stützrings 28. Hierzu verlaufen senkrecht zur Teilungsebene Bohrungen durch den Niederhalter 15, die auf dem Außendurchmesser in die Öffnungen 31 münden. Diese Bohrungen verengen sich im Bereich des Stützrings 28 um eine flanschartige Auflagefläche für die Verschraubungen 30 zu bilden. Die Öffnungen 31 nehmen nur einen Teil der Breite des Niederhalters 15 auf der radialen Außenfläche ein.

Muß während der Fertigung von Blechtafeln innerhalb einer Coillänge die Breite der Streifenabschnitte geändert werden oder muß der Schneidspalt bei dicken Warmbreitbändern wegen starker Toleranzabweichungen des Warmbreitbandes nachjustiert werden, genügt nunmehr eine relative geringe Stillstandszeit der Querzerteilstraße, um die notwendige Einstellung der Kreismesserpaare 13a,13b vorzunehmen. Dabei wird die obere Messerwelle 12a an dem Gerüst über die Stelleinrichtung 14 aus dem Schnittbereich herausgefahren. Sind lediglich Justierungen des Schneidspaltes notwendig, brauchen die Muttern 16 nur etwas gelöst zu werden, um nach Korrektur der Kreismesserposition wieder festgezogen zu werden.

Sollen die Kreismesser über größere Breiten auf der Messerwelle 12a,12b verstellt werden oder in eine Parkstellung an den Enden der Messerwellen 12a,12b gebracht werden, können die Muttern 16 durch Lösen der Verschraubung 24 von den Messerwellen 12a,12b vollständig demontiert, woraufhin sich die Kreismesser 13a,13b und die Niederhalter 15 auf den Tragkeilen 20 gleitend verschieben lassen. Dadurch, daß die Muttern 16 demontierbar sind, wird für das Parken der Schneideinheiten an den Enden der Messerwellen 12a,12b weniger Platz benötigt. Bei Abschluß der Einstellarbeiten wird die obere Messerwelle 12a abgesenkt und die nun anschließende Zerteilung kann mit neuen Streifenmaßen nach verhältnismäßig kurzer Montage wiederaufgenommen werden.

A N S P R Ü C H E

1. Querzerteilstraße für gewalzte, kontinuierlich
durchlaufende Blechbänder, mit Förder- und Richteinrichtungen und mit einer in Durchlaufrichtung
hinter einer Saumschere angeordneten Querschere,
d a d u r c h   g e k e n n z e i c h n e t ,
daß zwischen der Saumschere (4) und der Querschere
(6) als Längsschere eine Kreismesserschere (5)
angeordnet ist, die eine obere und eine untere in
den Ständern (11) eines Gerüstes gelagerte und
sich zwischen den Ständern (11) erstreckende
Messerwelle (12a,12b) aufweist.

2. Querzerteilstraße nach Anspruch 1, dadurch gekennzeichnet, daß jede der Messerwellen (12a,12b) ein
sich im wesentlichen über die gesamte Länge der
Messerwellen (12a,12b) zwischen den Ständern (11)
erstreckendes Gewinde (22) aufweist und jeweils
mindestens eine Schneideinheit aus einem Kreismesser (13a,13b) und mindestens einem Niederhalter (15) trägt, die auf der Messerwelle
(12a,12b) mit Hilfe von Muttern (16) festsetzbar
ist.

3. Querzerteilstraße nach Anspruch 2, dadurch gekennzeichnet, daß die lichte Weite zwischen den Ständern (11) um die Breite von mindestens zwei
Schneideinheiten und mindestens zwei Muttern (16)
breiter ist als die maximal bearbeitbare Bandbreite des Blechbandes (16).

4.  Querzerteilstraße nach Anspruch 2 oder 3, dadurch gekennzeichnet, daß jede der Messerwellen (12a,12b) auf dem Umfang verteilte, das Gewinde (22) radial unterbrechende Längsnuten (19) aufweist, daß der Innendurchmesser der Kreismesser (13a,13b) und der Niederhalter (15) größer ist als der Außendurchmesser der Messerwellen, daß die radiale Innenfläche der Kreismesser (13a,13b) und Niederhalter (15) mit Längsnuten (21,32) versehen sind, die sich mit den Längsnuten (19) der Messerwellen (12a,12b) jeweils zu einem Durchlaß ergänzen und daß jeweils ein dem Durchlaß angepaßter Tragkeil (20) über die Breite einer Schneideinheit in jeden Durchlaß formschlüssig eingreift.

5.  Querzerteilstraße nach einem der Ansprüche 2 bis 4, dadurch gekennzeichnet, daß die Muttern (16) aus zwei relativ zueinander bewegbaren Hälften (16a,16b) bestehen.

6.  Querzerteilstraße nach Anspruch 5, dadurch gekennzeichnet, daß die einen Enden der Hälften über ein Gelenk (23) verbunden sind und die anderen Enden miteinander verschraubbar sind.

7.  Querzerteilstraße nach einem der Ansprüche 2 bis 6, dadurch gekennzeichnet, daß mindestens ein Niederhalter (15) aus zwei relativ zueinander bewegbaren Hälften (15a,15b) besteht.

FIG.1

FIG.2

0169962

**FIG.3**

**FIG.4**

**FIG.5**

FIG.6

FIG.7

FIG.9

15a

15b

31

29

15a    32    30    12a    31    32    28    29

30    16    20    31    19    15b

FIG.8

**Europäisches Patentamt**

## EUROPÄISCHER RECHERCHENBERICHT

### EINSCHLÄGIGE DOKUMENTE

EP 85101587.5

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - B - 1 156 294 (JUNKER)<br>* Spalte 1, Zeilen 4-11 *<br>-- | 1 | B 23 D 31/00<br>B 23 D 19/06 |
| A | DE - A1 - 3 100 271 (NIPPON)<br>* Fig. 10 *<br>-- | 1 | |
| A | DE - B - 1 627 170 (DIENES WERKE)<br>* Anspruch 1; Fig. 2 *<br>-- | 7 | |
| A | US - A - 3 172 326 (HAMILTON)<br>* Spalte 1, Zeilen 11-18 *<br>-- | 2 | |
| A | GB - A - 945 A.D. 1904 (TYLER)<br>* Fig. 2,3,4 *<br>-- | 2,4 | **RECHERCHIERTE SACHGEBIETE (Int Cl 4)** |
| A | US - A - 4 220 064 (POTTER)<br>-- | | B 23 D 31/00<br>B 23 D 33/00 |
| A | US - A - 2 851 917 (FREW)<br>---- | | B 23 D 35/00<br>B 23 D 25/00<br>B 23 D 19/00 |

Der vorliegende Recherchenbericht wurde für alle Patentansprüche erstellt.

| Recherchenort | Abschlußdatum der Recherche | Prüfer |
|---|---|---|
| WIEN | 06-09-1985 | NIMMERRICHTER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82